# EUROPEAN PATENT SPECIFICATION

(11) **EP 3 862 387 B1**
(45) Date of publication and mention of the grant of the patent: **17.04.2024**
(21) Application number: 21150177.0
(22) Date of filing: 05.01.2021
(51) Int. Cl.: C08K 3/04, C08K 3/36, C08K 5/092, C08K 5/3445, C08K 5/3447, C08L 15/00, B60C 1/00

(54) **RUBBER COMPOSITION AND TIRE**
KAUTSCHUKZUSAMMENSETZUNG UND REIFEN
COMPOSITION DE CAOUTCHOUC ET PNEUMATIQUE

(30) Priority: 05.02.2020 JP 2020017969
(43) Date of publication of application: 11.08.2021
(73) Proprietor: Sumitomo Rubber Industries, Ltd., Kobe-shi, Hyogo 651-0072 (JP)
(72) Inventor: YASUDA, Rie, Kobe-shi, Hyogo 651-0072 (JP)
(74) Representative: TBK

(56) References cited:
- JP-A- 2007 321 040
- US-A1- 2015 322 234
- US-A1- 2015 368 444
- US-A1- 2016 108 209

## Description

### TECHNICAL FIELD

The present invention relates to rubber compositions and tires.

### BACKGROUND ART

Sulfur is usually used to crosslink (vulcanize) the rubber components of rubber compositions used in applications such as tires. In recent years, various crosslinking techniques other than sulfur, such as peroxides, have also been proposed for purposes such as improving rubber properties (see, for example, Patent Literature 1). However, the development of methods that provide good handling stability without using sulfur has not been sufficiently investigated. US2015/322234 discloses a tire based on a composition comprising the epoxy-polymer, the polycarboxylic acid and imidazole. The part of the tire is a tread. The elastomer composition in the examples presents an elongation at break at 0°C of 357 and 480 %. The loss tangent is higher than 0.14 at 23 °C

### CITATION LIST

### PATENT LITERATURE

Patent Literature 1: JP 2011-052146 A

### SUMMARY OF INVENTION

### TECHNICAL PROBLEM

The present invention aims to solve the above problem and provide rubber compositions and tires which provide improved handling stability.

### SOLUTION TO PROBLEM

The present invention relates to a rubber composition, including:
an epoxy group-containing polymer;
a polycarboxylic acid; and
a basic compound, wherein the basic compound is an imidazole compound,
the rubber composition having:
   a complex modulus E* at 30°C of 5 MPa or higher;
   a loss tangent at 30°C of 0.14 or lower; and
   an elongation at break at 0°C of 50% or higher.

Preferably, the polycarboxylic acid further contains a hydroxy group.

Preferably, the rubber composition includes silica and/or carbon black.

Preferably, the rubber composition has a loss tangent at 30°C of 0.10 or higher.

Preferably, the polycarboxylic acid is a compound represented by the following formula (I):

HOOC-A-COOH (I)

wherein A is a C1-C10 divalent hydrocarbon group which is optionally substituted.

The present invention also relates to a tire, including a tread containing the rubber composition,
the tread having a ground contact surface with a negative ratio of lower than 40%.

### ADVANTAGEOUS EFFECTS OF INVENTION

The rubber compositions of the present invention contain an epoxy group-containing polymer, a polycarboxylic acid, and a basic compound, wherein the basic compound is an imidazole compound, and have a complex modulus E* at 30°C of 5 MPa or higher, a loss tangent at 30°C of 0.14 or lower, and an elongation at break at 0°C of 50% or higher. Thus, the present invention provides rubber compositions and tires having good handling stability.

### DESCRIPTION OF EMBODIMENTS

The rubber compositions of the present invention contain an epoxy group-containing polymer, a polycarboxylic acid, and a basic compound. Further, the rubber compositions have a complex modulus E* at 30°C of 5 MPa or higher, a loss tangent at 30°C of 0.14 or lower, and an elongation at break at 0°C of 50% or higher.

The rubber compositions provide good handling stability without the need of using sulfur. The reason for this is not clear, but may be explained as follows.

Epoxy groups of the polymer and carboxy groups of the polycarboxylic acid may be chemically bonded to each other in the presence of the basic compound as a catalyst. Thus, it is believed that a network will be formed between the polymer molecules through the polycarboxylic acid containing a plurality of carboxy groups, resulting in crosslinking of the polymer.

In such a network, the distance between the polymer molecules will be kept constant because the distance between the polymer molecules essentially depends on the length of the hydrocarbon groups of the polycarboxylic acid. Thus, it is believed that concentration of stress is less likely to occur, and stress can be generated throughout the polymer matrix, even if a high input is applied, e.g., as in tires when the car makes a sharp turn.

Moreover, the rubber compositions have a complex modulus E* at 30°C of 5 MPa or higher and a loss tangent (tan δ) at 30°C of 0.14 or lower. This is believed to provide good response during steering of the car.

Moreover, when the driver turns the steering wheel of the car, the travel direction and the rotation direction of the tires are caused to temporarily differ from each other. In this case, it is considered that a high frequency input (deformation) is temporarily applied to the tires. The rubber compositions have an elongation at break at 0°C, which is lower than room temperature, of 50% or higher. This is believed to reduce the abrasion of the tires at the moment when a steering angle is applied, thus making it possible to maintain good response.

Herein, the complex modulus E* and tan δ of the (crosslinked) rubber compositions are measured using EPLEXOR available from GABO at a frequency of 10 Hz, an initial strain of 10%, a dynamic strain of 1%, and a temperature of 30°C.

Herein, the elongation at break of the (crosslinked) rubber compositions is measured in accordance with JIS K 6251:2017 using No. 7 dumbbell specimens by tensile testing at 0°C.

As described above, the rubber compositions have a complex modulus E* at 30°C of 5 MPa or higher. The E* is preferably 8 MPa or higher, more preferably 10 MPa or higher, still more preferably 12 MPa or higher, but is preferably 25 MPa or lower, more preferably 20 MPa or lower, still more preferably 18 MPa or lower. With an E* within the range indicated above, the advantageous effect tends to be suitably achieved.

As described above, the rubber compositions have a tan δ at 30°C of 0.14 or lower. The tan δ is preferably 0.13 or lower, more preferably 0.12 or lower, but is preferably 0.05 or higher, more preferably 0.08 or higher, still more preferably 0.10 or higher. With a tan δ within the range indicated above, the advantageous effect tends to be suitably achieved.

As described above, the rubber compositions have an elongation at break at 0°C of 50% or higher. The elongation at break is preferably 60% or higher, more preferably 70% or higher, still more preferably 80% or higher, but is preferably 800% or lower, more preferably 500% or lower, still more preferably 400% or lower. With an elongation at break within the range indicated above, the advantageous effect tends to be suitably achieved.

The complex modulus E*, tan δ, and elongation at break of the rubber compositions can be controlled by varying the types and amounts of the chemicals (in particular, rubber component, filler, softener, sulfur, vulcanization accelerator, silane coupling agent, and polycarboxylic acid) incorporated into the rubber compositions. For example, the complex modulus E* tends to be increased by reducing the amount of softener, or increasing the amount of filler, or increasing the amount of sulfur. The tan δ tends to be reduced by using a softener highly compatible with the rubber component, or reducing the amount of softener, or increasing the amount of sulfur, or increasing the amount of vulcanization accelerator, or increasing the amount of silane coupling agent. The elongation at break tends to be increased by increasing the amount of softener, or reducing the amount of filler, or reducing the amount of polycarboxylic acid.

The following describes usable chemicals.

The rubber compositions contain an epoxy group-containing polymer (epoxidized polymer).

The epoxidized polymer can be produced by epoxidizing a polymer by a common method, such as oxidation of the polymer with a peroxide. Examples of the polymer to be epoxidized include thermosetting elastomers such as rubber materials and thermoplastic elastomers such as polyolefin and polystyrene. These may be used alone or in combinations of two or more. From the standpoint of handling stability during use in tires, thermosetting elastomers are preferred among these, with rubber materials being more preferred.

Examples of rubber materials that may be used for the epoxidized polymer include diene rubbers such as isoprene-based rubbers, polybutadiene rubber (BR), styrene-butadiene rubber (SBR), and styrene-isoprene-butadiene rubber (SIBR). Examples of the isoprene-based rubbers include natural rubber (NR), polyisoprene rubber (IR), refined NR, modified NR, and modified IR. These may be used alone or in combinations of two or more. SBR, BR, and isoprene-based rubbers are preferred among these, with isoprene-based rubbers being more preferred, with NR being still more preferred.

The degree of epoxidation of the epoxidized polymer is preferably 5 mol% or higher, more preferably 15 mol% or higher, still more preferably 25 mol% or higher, particularly preferably 30 mol% or higher, but is preferably 80 mol% or lower, more preferably 65 mol% or lower, still more preferably 50 mol% or lower. With a degree of epoxidation within the range indicated above, the advantageous effect tends to be suitably achieved.

The degree of epoxidation means the ratio of the number of epoxidized carbon-carbon double bonds in the epoxidized polymer to the total number of carbon-carbon double bonds in the unepoxidized polymer. The degree of epoxidation may be determined, for example, by titration analysis or nuclear magnetic resonance (NMR) analysis.

When the epoxidized polymer is a rubber material (e.g., epoxidized natural rubber (ENR)), the amount of the epoxidized polymer based on 100% by mass of the rubber component is preferably 50% by mass or more, more preferably 65% by mass or more, still more preferably 80% by mass or more, particularly preferably 90% by mass or more, and may be 100% by mass. With an amount within the range indicated above, the advantageous effect tends to be suitably achieved.

When the epoxidized polymer is a polymer other than rubber materials (e.g., epoxidized polyethylene), the amount of the epoxidized polymer per 100 parts by mass of the rubber component is preferably 10 parts by mass or more, more preferably 15 parts by mass or more, still more preferably 20 parts by mass or more, but is preferably 50 parts by mass or less, more preferably 45 parts by mass or less, still more preferably 40 parts by mass or less. With an amount within the range indicated above, the advantageous effect tends to be suitably achieved.

The rubber compositions contain a polycarboxylic acid.

The polycarboxylic acid contains a plurality of carboxy groups and may suitably be a compound represented by the formula (I) below. This compound, which has carboxy groups at both ends, is believed to be able to form a strong network between the polymer molecules, resulting in better handling stability. Moreover, it is also expected to be effective in improving fuel economy (low heat build-up properties).

HOOC-A-COOH (I)

In the formula, A is a C1-C10 divalent hydrocarbon group which is optionally substituted.

The number of carbon atoms in the hydrocarbon group for A may be any number of 1 to 10, and is preferably 2 or more, but preferably 6 or less, more preferably 4 or less, still more preferably 3 or less.

Examples of the hydrocarbon group for A include alkylene, alkenylene, cycloalkylene, and arylene groups, with alkylene groups being preferred.

Examples of the alkylene groups include linear alkylene groups such as a methylene group, an ethylene group, a n-propylene group, a n-butylene group, and a hexylene group, and branched alkylene groups such as an isopropylene group, an isobutylene group, and a 2-methylpropylene group. Linear alkylene groups are preferred, an ethylene group and a n-propylene group are more preferred, and an ethylene group is still more preferred.

The hydrocarbon group for A is optionally substituted. Examples of substituents include hydroxy, carboxy, alkoxy, and amino groups. One or two or more such substituents may be used. Preferred among these is a hydroxy group. Thus, when the polycarboxylic acid further contains a hydroxy group, i.e., the polycarboxylic acid is a hydroxy acid containing carboxy and hydroxy groups, it is believed that the intermediate formed in the reaction between the epoxy groups of the epoxidized polymer and the carboxy groups of the polycarboxylic acid has improved stability, and thus the network between the polymer molecules has improved strength. Moreover, it is also expected to be effective in improving fuel economy (low heat build-up properties).

Specific examples of the polycarboxylic acid include dicarboxylic acids such as malic acid, tartaric acid, and suberic acid, tricarboxylic acids such as citric acid, and hexacarboxylic acids such as mellitic acid. These may be used alone or in combinations of two or more. Among these, dicarboxylic acids are preferred, and dicarboxylic acids further containing a hydroxy group such as malic acid and tartaric acid are more preferred.

The amount of the polycarboxylic acid per 100 parts by mass of the epoxidized polymer is preferably 1 part by mass or more, more preferably 3 parts by mass or more, still more preferably 6 parts by mass or more, particularly preferably 7 parts by mass or more, but is preferably 30 parts by mass or less, more preferably 20 parts by mass or less, still more preferably 12 parts by mass or less. With an amount within the range indicated above, the advantageous effect tends to be suitably achieved.

The rubber compositions contain a basic compound.

The basic compound is an imidazole compound. The imidazole compound is a compound having an imidazole ring and is preferably a compound represented by the following formula (II): 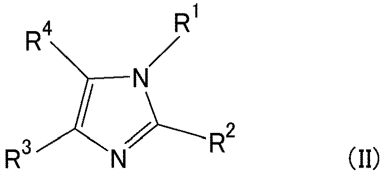 wherein R¹, R², R³, and R⁴ are the same or different and each represent a hydrogen atom or a hydrocarbon group, and R³ and R⁴ may be joined together to form a ring structure.

Examples of the hydrocarbon group for R¹, R², R³, or R⁴ include alkyl groups having 1 to 20, preferably 2 to 12 carbon atoms, cycloalkyl groups having 5 to 24, preferably 5 to 8 carbon atoms, aryl groups having 6 to 30, preferably 6 to 24 carbon atoms, and aralkyl groups having 7 to 25, preferably 7 to 13 carbon atoms.

When R³ and R⁴ are joined together to form a ring structure, the ring structure formed by R³, R⁴, and the carbon atoms of the imidazole ring is, for example, a C5-C12 aromatic, heterocyclic, or aliphatic ring.

From the standpoint of the strength of the network between the polymer molecules, preferably at least one of R¹, R², R³, and R⁴ groups is an alkyl group. More preferably, at least one of R¹, R², R³, and R⁴ groups is an alkyl group and the other three are hydrogen atoms. Still more preferably, R¹ is an alkyl group and R², R³, and R⁴ are hydrogen atoms.

Specific examples of the imidazole compound include imidazole, 1-butylimidazole, 1-propylimidazole, 1-ethylimidazole, 1-methylimidazole, 1,2-dimethylimidazole, 1-decyl-2-methylimidazole, and 1-benzyl-2-methylimidazole. These may be used alone or in combinations of two or more. Among these, 1-butylimidazole, 1-propylimidazole, 1-ethylimidazole, and 1-methylimidazole are preferred, with 1-butylimidazole being more preferred.

The amount of the basic compound per mole of carboxyl group in the polycarboxylic acid is preferably 0.05 molar equivalents or more, more preferably 0.15 molar equivalents or more, still more preferably 0.25 molar equivalents or more, but is preferably 3 molar equivalents or less, more preferably 2 molar equivalents or less, still more preferably 1 molar equivalent or less. With an amount within the range indicated above, the advantageous effect tends to be suitably achieved.

The rubber compositions preferably contain silica and/or carbon black as a reinforcing material. This may increase the strength of the network formed between the polymer molecules.

Examples of the silica include dry silica (anhydrous silica) and wet silica (hydrous silica). Among these, wet silica is preferred because it contains a large number of silanol groups.

The amount of the silica per 100 parts by mass of the rubber component is preferably 5 parts by mass or more, more preferably 20 parts by mass or more, still more preferably 35 parts by mass or more, particularly preferably 45 parts by mass or more, but is preferably 150 parts by mass or less, more preferably 100 parts by mass or less, still more preferably 80 parts by mass or less.

The silica preferably has a nitrogen adsorption specific surface area (N₂SA) of 30 m²/g or greater, more preferably 100 m²/g or greater, still more preferably 150 m²/g or greater, particularly preferably 175 m²/g or greater. The N₂SA is also preferably 300 m²/g or less, more preferably 250 m²/g or less, still more preferably 200 m²/g or less.

The nitrogen adsorption specific surface area of the silica is measured by the BET method in accordance with ASTM D3037-81.

The silica may be commercially available from Degussa, Rhodia, Tosoh Silica Corporation, Solvay Japan, Tokuyama Corporation, etc.

The silica is preferably used together with a silane coupling agent.

Non-limiting examples of the silane coupling agent include sulfide silane coupling agents such as bis(3-triethoxysilylpropyl)tetrasulfide, bis(2-triethoxysilylethyl)tetrasulfide, bis(4-triethoxysilylbutyl)tetrasulfide, bis(3-trimethoxysilylpropyl)tetrasulfide, bis(2-trimethoxysilylethyl)tetrasulfide, bis(2-triethoxysilylethyl)trisulfide, bis(4-trimethoxysilylbutyl)trisulfide, bis(3-triethoxysilylpropyl)disulfide, bis(2-triethoxysilylethyl)disulfide, bis(4-triethoxysilylbutyl)disulfide, bis(3-trimethoxysilylpropyl)disulfide, bis(2-trimethoxysilylethyl)disulfide, bis(4-trimethoxysilylbutyl)disulfide, 3-trimethoxysilylpropyl-N,N-dimethylthiocarbamoyl tetrasulfide, 2-triethoxysilylethyl-N,N-dimethylthiocarbamoyl tetrasulfide, and 3-triethoxysilylpropyl methacrylate monosulfide; mercapto silane coupling agents such as 3-mercaptopropyltrimethoxysilane and 2-mercaptoethyltriethoxysilane; vinyl silane coupling agents such as vinyltriethoxysilane and vinyltrimethoxysilane; amino silane coupling agents such as 3-aminopropyltriethoxysilane and 3-aminopropyltrimethoxysilane; glycidoxy silane coupling agents such as γ-glycidoxypropyltriethoxysilane and γ-glycidoxypropyltrimethoxysilane; nitro silane coupling agents such as 3-nitropropyltrimethoxysilane and 3-nitropropyltriethoxysilane; and chloro silane coupling agents such as 3-chloropropyltrimethoxysilane and 3-chloropropyltriethoxysilane. Commercial products available from Degussa, Momentive, Shin-Etsu Silicone, Tokyo Chemical Industry Co., Ltd., AZmax. Co., Dow Corning Toray Co., Ltd., etc. may be used. These may be used alone or in combinations of two or more. Preferred among these are sulfide or mercapto silane coupling agents.

The amount of the silane coupling agent per 100 parts by mass of the silica is preferably 3 parts by mass or more, more preferably 6 parts by mass or more, still more preferably 8 parts by mass or more, but is preferably 20 parts by mass or less, more preferably 15 parts by mass or less.

Non-limiting examples of the carbon black include GPF, FEF, HAF, ISAF, and SAF. Commercial products available from Asahi Carbon Co., Ltd., Cabot Japan K.K., Tokai Carbon Co., Ltd., Mitsubishi Chemical Corporation, Lion Corporation, NSCC Carbon Co., Ltd., Columbia Carbon, etc. may be used.

The amount of the carbon black per 100 parts by mass of the rubber component is preferably 5 parts by mass or more, more preferably 10 parts by mass or more, still more preferably 15 parts by mass or more, but is preferably 70 parts by mass or less, more preferably 40 parts by mass or less, still more preferably 30 parts by mass or less.

The carbon black preferably has a nitrogen adsorption specific surface area (N₂SA) of 80 m²/g or greater, more preferably 100 m²/g or greater, still more preferably 110 m²/g or greater. The N₂SA is also preferably 160 m²/g or less, more preferably 140 m²/g or less, still more preferably 125 m²/g or less.

The nitrogen adsorption specific surface area of the carbon black is measured in accordance with JIS K 6217-2:2001.

As described above, the rubber compositions may produce a sufficiently cross-linked structure without using sulfur because the epoxy groups of the epoxidized polymer and the carboxy groups of the polycarboxylic acid together may form a network. This permits a reduction in the amount of sulfur and chemicals that aid in crosslinking (vulcanization) with sulfur (e.g., vulcanization accelerators, stearic acid, zinc oxide).

The amount of sulfur per 100 parts by mass of the rubber component is preferably 1 part by mass or less, more preferably 0.5 parts by mass or less, still more preferably 0.1 parts by mass or less, and may be 0 parts by mass.

The amount of vulcanization accelerators per 100 parts by mass of the rubber component is preferably 1 part by mass or less, more preferably 0.5 parts by mass or less, still more preferably 0.1 parts by mass or less, and may be 0 parts by mass.

The amount of stearic acid per 100 parts by mass of the rubber component is preferably 1 part by mass or less, more preferably 0.5 parts by mass or less, still more preferably 0.1 parts by mass or less, and may be 0 parts by mass.

The amount of zinc oxide per 100 parts by mass of the rubber component is preferably 1 part by mass or less, more preferably 0.5 parts by mass or less, still more preferably 0.1 parts by mass or less, and may be 0 parts by mass.

The rubber compositions may contain an oil.

Examples of the oil include process oils, vegetable oils, and mixtures thereof. Examples of the process oils include paraffinic process oils, aromatic process oils, and naphthenic process oils. Examples of the vegetable oils include castor oil, cotton seed oil, linseed oil, rapeseed oil, soybean oil, palm oil, coconut oil, peanut oil, rosin, pine oil, pine tar, tall oil, corn oil, rice oil, safflower oil, sesame oil, olive oil, sunflower oil, palm kernel oil, camellia oil, jojoba oil, macadamia nut oil, and tung oil. These may be used alone or in combinations of two or more. Among these, process oils are preferred, with aromatic process oils being more preferred.

The amount of the oil per 100 parts by mass of the rubber component is preferably 2 parts by mass or more, more preferably 5 parts by mass or more, still more preferably 7 parts by mass or more, but is preferably 50 parts by mass or less, more preferably 30 parts by mass or less, still more preferably 20 parts by mass or less. The amount of the oil includes the amount of the oils (extender oils) contained in the rubbers (oil extended rubbers), if used.

The rubber compositions may contain a resin.

Any resin generally used in the tire industry may be used, and examples include rosin-based resins, coumarone indene resins, α-methylstyrene-based resins, terpene-based resins, p-t-buthylphenol acetylene resins, acrylic resins, C5 resins, and C9 resins. Commercial products available from Maruzen Petrochemical Co., Ltd., Sumitomo Bakelite Co., Ltd., Yasuhara Chemical Co., Ltd., Tosoh Corporation, Rutgers Chemicals, BASF, Arizona Chemical, Nitto Chemical Co., Ltd., Nippon Shokubai Co., Ltd., ENEOS Corporation, Arakawa Chemical Industries, Ltd., Taoka Chemical Co., Ltd., Toagosei Co., Ltd., etc. may be used. These may be used alone or in combinations of two or more.

The amount of the resin per 100 parts by mass of the rubber component is preferably 1 part by mass or more, more preferably 5 parts by mass or more, but is preferably 30 parts by mass or less, more preferably 20 parts by mass or less.

The rubber compositions may contain a wax.

Non-limiting examples of the wax include petroleum waxes such as paraffin waxes and microcrystalline waxes; naturally-occurring waxes such as plant waxes and animal waxes; and synthetic waxes such as polymers of ethylene, propylene, or other similar monomers. These may be used alone or in combinations of two or more. Among these, petroleum waxes are preferred, with paraffin waxes being more preferred.

The wax may be commercially available from Ouchi Shinko Chemical Industrial Co., Ltd., Nippon Seiro Co., Ltd., Seiko Chemical Co., Ltd., etc.

The amount of the wax per 100 parts by mass of the rubber component is preferably 0.3 parts by mass or more, more preferably 0.5 parts by mass or more, but is preferably 20 parts by mass or less, more preferably 10 parts by mass or less.

The rubber compositions may contain an antioxidant.

Examples of the antioxidant include naphthylamine antioxidants such as phenyl-α-naphthylamine; diphenylamine antioxidants such as octylated diphenylamine and 4,4'-bis(α,α'-dimethylbenzyl)diphenylamine; p-phenylenediamine antioxidants such as N-isopropyl-N'-phenyl-p-phenylenediamine, N-(1,3-dimethylbutyl)-N'-phenyl-p-phenylenediamine, and N,N'-di-2-naphthyl-p-phenylenediamine; quinoline antioxidants such as 2,2,4-trimethyl-1,2-dihydroquinoline polymer; monophenolic antioxidants such as 2,6-di-t-butyl-4-methylphenol and styrenated phenol; and bis-, tris-, or polyphenolic antioxidants such as tetrakis[methylene-3-(3',5'-di-t-butyl-4'-hydroxyphenyl)propionate]methane. These may be used alone or in combinations of two or more. Preferred among these are p-phenylenediamine or quinoline antioxidants.

The antioxidant may be commercially available from Seiko Chemical Co., Ltd., Sumitomo Chemical Co., Ltd., Ouchi Shinko Chemical Industrial Co., Ltd., Flexsys, etc.

The amount of the antioxidant per 100 parts by mass of the rubber component is preferably 1 part by mass or more, more preferably 3 parts by mass or more, but is preferably 10 parts by mass or less, more preferably 5 parts by mass or less.

In addition to the above components, the rubber compositions may further contain other compounding ingredients commonly used in the tire industry, such as organic crosslinking agents. The amount of each of such compounding ingredients is preferably 0.1 to 200 parts by mass per 100 parts by mass of the rubber component.

The rubber compositions may be prepared, for example, by kneading the components using a rubber kneading machine such as an open roll mill or a Banbury mixer, and then press-molding the kneaded mixture.

The components are kneaded under the following conditions: the kneading temperature is usually 100 to 180°C, preferably 120 to 170°C, and the kneading duration is usually 1 to 30 minutes, preferably 2 to 10 minutes. The kneaded mixture obtained by kneading is press-molded (vulcanized) under the following conditions: the temperature is usually 140 to 190°C, preferably 150 to 185°C, and the duration is usually 1 to 60 minutes, preferably 5 to 30 minutes.

The rubber compositions may be used in tire components (i.e., as rubber compositions for tires) including, for example, treads (cap treads), sidewalls, base treads, undertreads, clinches, bead apexes, breaker cushion rubbers, rubbers for carcass cord toppings, insulations, chafers, and innerliners, as well as side reinforcing layers of run-flat tires. They are particularly suitable for treads (cap treads).

The tires (e.g., pneumatic tires) of the present invention may be produced from the above-described rubber compositions by usual methods.

Specifically, the uncrosslinked (unvulcanized) rubber compositions may each be extruded into the shape of a tread and then assembled with other tire components on a tire building machine in a usual manner to build an uncrosslinked (unvulcanized) tire, which may then be heated and pressurized in a vulcanizer to produce a tire.

The tires have a tread which includes any of the rubber compositions. It is sufficient that the tread is at least partially formed from the corresponding rubber composition, and the entire tread may be formed from the rubber composition. In addition to the tread, the rubber composition may be used in tire components other than treads.

In the tires, the tread preferably has a ground contact surface with a negative ratio of lower than 40%, more preferably 35% or lower, still more preferably 30% or lower, particularly preferably 25% or lower. The negative ratio is also preferably 5% or higher, more preferably 10% or higher, still more preferably 15% or higher. With a negative ratio within the range indicated above, the advantageous effect tends to be suitably achieved.

The negative ratio of the ground contact surface of the tread refers to the ratio of the total groove area within the ground contact surface to the total ground contact surface area.

The tires may be used as, for example, tires for passenger vehicles, large passenger vehicles, large SUVs, heavy duty vehicles such as trucks and buses, light trucks, or motorcycles, or as racing tires (high performance tires). The tires may also be used as all-season tires, summer tires, or cold weather tires (winter tires), for example.

### EXAMPLES

The present invention is specifically described with reference to, but not limited to, examples below.

ENR 50: ENR (degree of epoxidation: 50 mol%) available from Kumpulan Guthrie Berhad
ENR 25: ENR (degree of epoxidation: 25 mol%) available from Kumpulan Guthrie Berhad
1-Butylimidazole: 1-butylimidazole available from Tokyo Chemical Industry Co., Ltd.
Malic acid: malic acid available from Fuso Chemical Co., Ltd.
Tartaric acid: tartaric acid available from Fuso Chemical Co., Ltd.
Suberic acid: suberic acid available from Tokyo Chemical Industry Co., Ltd.
Silica: ULTRASIL VN3 (N₂SA 175 m²/g) available from Evonik Degussa
Silane coupling agent: Si69 (bis(3-triethoxysilylpropyl)tetrasulfide) available from Evonik Degussa
Antioxidant: OZONONE 6C (N-(1,3-dimethylbutyl)-N'-phenyl-p-phenylenediamine) available from Seiko Chemical Co., Ltd.
Peroxide crosslinking agent: PERCUMYL (registered trademark) D-40 available from NOF Corporation

### (Examples and Comparative Examples)

The chemicals in the formulation amounts indicated in Table 1 were kneaded at 150°C for five minutes using a 1.7 L Banbury mixer (Kobe Steel, Ltd.) to give a kneaded mixture.

The kneaded mixture was press-molded at 170°C for 10 minutes using a 2 mm-thick mold to obtain a crosslinked rubber composition (sheet).

In Comparative Example 4 in which the peroxide crosslinking agent was used, the following steps were carried out in the order specified: the chemicals other than the peroxide crosslinking agent were kneaded at 150°C for five minutes using a 1.7 L Banbury mixer (Kobe Steel, Ltd.); and then the peroxide crosslinking agent was kneaded at 80°C for four minutes into the kneaded mixture using an open roll mill. Thereafter, the resulting kneaded mixture was press-molded at 170°C for 10 minutes using a 2 mm-thick mold to obtain a crosslinked rubber composition (sheet).

The rubber compositions prepared as above were evaluated as described below. The results are shown in Tables 1 and 2.

### (Elongation at break)

No. 7 dumbbell specimens prepared from the rubber compositions were subjected to a tensile test at 0°C in accordance with JIS K 6251:2017 to determine the elongation at break (%).

### (Viscoelastic analysis (E* at 30°C, tan δ at 30°C))

The complex modulus E* and tan δ of the rubber compositions were measured using EPLEXOR available from GABO at a frequency of 10 Hz, an initial strain of 10%, a dynamic strain of 1%, and a temperature of 30°C.

### (Vehicle handling performance)

The values of elongation at break, complex modulus E*, and tan δ were input as properties of treads to perform computer simulations of tires with a negative ratio indicated in Table 2 running at 80 km/h. In the simulations, the reaction force from the road surface at the moment when a steering angle was applied was calculated taking into account the effect of abrasion. The results are expressed as an index, with Comparative Example 1 taken as 100. A higher index indicates better vehicle handling performance (handling stability).

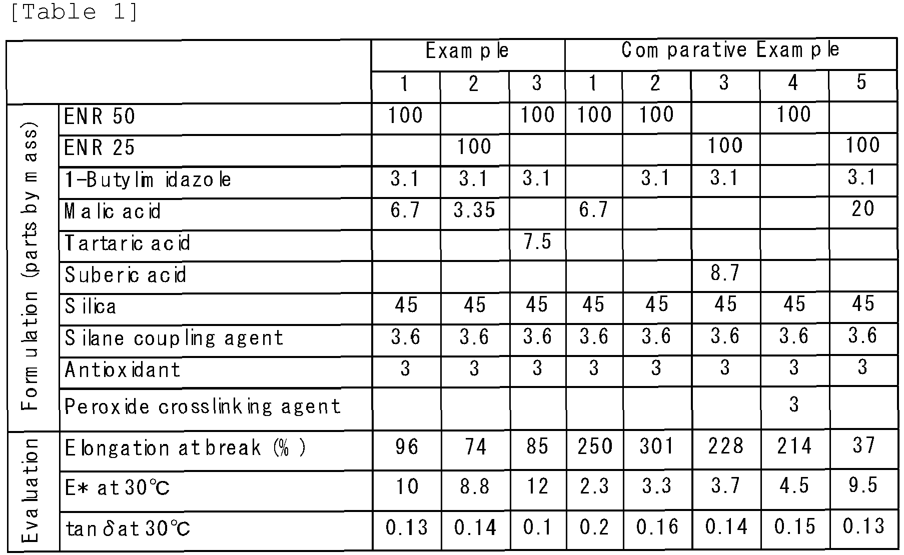

| | Example | | | Comparative Example | | | | | Example | | |
|---|---|---|---|---|---|---|---|---|---|---|---|
| | 4 | 5 | 6 | 6 | 7 | 8 | 9 | 10 | 7 | 8 | 9 |
| Type of rubber composition | Example 1 | Example 2 | Example 3 | Com parative Example 1 | Com parative Example 2 | Com parative Example 3 | Com parative Example 4 | Com parative Example 5 | Example 3 | Example 3 | Example 3 |
| Negative ratio (%) | 30 | 30 | 30 | 30 | 30 | 30 | 30 | 30 | 25 | 35 | 45 |
| Vehicle handling perform ance | 118 | 111 | 129 | 93 | 97 | 94 | 98 | 100 | 136 | 120 | 110 |

Table 2 shows that the examples exhibited good handling stability as compared to the comparative examples.

Provided are rubber compositions and tires which provide improved handling stability. The present invention relates to a rubber composition containing: an epoxy group-containing polymer, a polycarboxylic acid, and a basic compound, wherein the basic compound is an imidazole compound, the rubber composition having a complex modulus E* at 30°C of 5 MPa or higher, a loss tangent at 30°C of 0.14 or lower, and an elongation at break at 0°C of 50% or higher.

## Claims

1. A tire, comprising a tread comprising a rubber composition,
the rubber composition comprising:
an epoxy group-containing polymer;
a polycarboxylic acid; and
a basic compound, wherein the basic compound is an imidazole compound,
the rubber composition having:
a complex modulus E* at 30°C of 5 MPa or higher;
a loss tangent at 30°C of 0.14 or lower; and
an elongation at break at 0°C of 50% or higher.

2. The tire according to claim 1,
wherein the polycarboxylic acid further contains a hydroxy group.

3. The tire according to claim 1 or 2,
wherein the rubber composition comprises silica and/or carbon black.

4. The tire according to any one of claims 1 to 3,
wherein the rubber composition has a loss tangent at 30°C of 0.10 or higher.

5. The tire according to any one of claims 1 to 4,
wherein the polycarboxylic acid is a compound represented by the following formula (I):
HOOC-A-COOH (I)
wherein A is a C1-C10 divalent hydrocarbon group which is optionally substituted.

6. The tire according to any one of claims 1 to 5,
wherein the tread has a ground contact surface with a negative ratio of lower than 40%.

## Patentansprüche

1. Reifen, der eine Lauffläche umfasst, die eine Kautschukzusammensetzung enthält,
wobei die Kautschukzusammensetzung umfasst:
ein epoxygruppenhaltiges Polymer;
eine Polycarbonsäure; und
eine basische Verbindung, wobei die basische Verbindung eine Imidazolverbindung ist,
wobei die Kautschukzusammensetzung aufweist:
einen komplexen Modul E* bei 30°C von 5 MPa oder höher;
einen Verlusttangens bei 30°C von 0,14 oder weniger; und
eine Bruchdehnung bei 0°C von 50% oder höher.

2. Reifen nach Anspruch 1,
wobei die Polycarbonsäure ferner eine Hydroxygruppe enthält.

3. Reifen nach Anspruch 1 oder 2,
wobei die Kautschukzusammensetzung Siliciumoxid und/oder Carbon Black enthält.

4. Reifen nach einem der Ansprüche 1 bis 3,
wobei die Kautschukzusammensetzung einen Verlusttangens bei 30°C von 0,10 oder höher aufweist.

5. Reifen nach einem der Ansprüche 1 bis 4,
wobei die Polycarbonsäure eine Verbindung ist, die durch die folgende Formel (I) dargestellt wird:
HOOC-A-COOH (I)
wobei A eine zweiwertige C1-C10-Kohlenwasserstoffgruppe ist, die optional substituiert ist.

6. Reifen nach einem der Ansprüche 1 bis 5,
wobei die Lauffläche eine Bodenkontaktfläche mit einem negativen Verhältnis von weniger als 40% aufweist.

## Revendications

1. Pneu, comprenant une bande de roulement comprenant une composition du caoutchouc,
la composition du caoutchouc comprenant:
un polymère contenant un groupe époxy;
un acide polycarboxylique; et
un composé basique, dans lequel le composé basique est un composé imidazole,
la composition du caoutchouc ayant:
un module complexe E* à 30°C de 5 MPa ou plus;
une tangente de perte à 30°C de 0,14 ou moins; et
un allongement à la rupture à 0°C de 50 % ou plus.

2. Pneu selon la revendication 1,
dans lequel l'acide polycarboxylique contient en outre un groupe hydroxy.

3. Pneu selon la revendication 1 ou 2,
dans lequel la composition du caoutchouc comprend de la silice et/ou du noir de carbone.

4. Pneu selon l'une des revendications 1 à 3,
dans lequel la composition du caoutchouc a une tangente de perte à 30°C de 0,10 ou plus.

5. Pneu selon l'une quelconque des revendications 1 à 4,
dans lequel l'acide polycarboxylique est un composé représenté par la formule suivante (I):
HOOC-A-COOH (I)
dans laquelle A est un groupe d'hydrocarbures divalents en C1-C10 éventuellement substitué.

6. Pneu selon l'une quelconque des revendications 1 à 5,
dans lequel la bande de roulement présente une surface de contact au sol dont le rapport négatif est inférieur à 40 %.
